Europäisches Patentamt

European Patent Office

Office européen des brevets

(11) Veröffentlichungsnummer: **0 093 832**
A1

## (12) EUROPÄISCHE PATENTANMELDUNG

(21) Anmeldenummer: 83100741.4

(51) Int. Cl.³: **B 60 K 31/00**

(22) Anmeldetag: 27.01.83

(30) Priorität: 11.05.82 GR 68120

(43) Veröffentlichungstag der Anmeldung: 16.11.83
Patentblatt 83/46

(84) Benannte Vertragsstaaten: DE FR GB IT SE

(71) Anmelder: Vesyris, Spyridon, Iphigenia 36A Iraklio
Attikis, Athen (GR)

(72) Erfinder: Vesyris, Spyridon, Iphigenia 36A Iraklio Attikis,
Athen (GR)

(74) Vertreter: Keller, René, Dr. et al, Patentanwälte Hartmut
Keller, Dr. René Keller Postfach 12, CH-3000 Bern 7 (CH)

(54) Sicherheitsvorrichtung in einem Fahrzeug.

(57) Ein in einem Kraftfahrzeug quer zur Fahrtrichtung pendelnd gelagertes Betätigungsorgan (3) schließt bei einer vorbestimmten, durch die Zentrifugalkraft bedingten Auslenkung einen Schalter (3, 14–17), wodurch eine Unterbrechung der Zündimpulse oder der Kraftstoffzufuhr ausgelöst wird.

Durch entsprechende Wahl der Auslenkung, bei der der Schalter geschlossen wird, wird erreicht, daß die Fahrzeuggeschwindigkeit beim Kurvenfahren bei einer noch nicht kritischen Zentrifugalkraft verzögert und dadurch eine Schleudergefahr vermieden wird.

## Sicherheitsvorrichtung in einem Fahrzeug

Die Erfindung betrifft eine Sicherheitsvorrichtung in einem Fahrzeug, insbesondere einem Automobil; ihr liegt
die Aufgabe zugrunde, eine einfache, auch nachträglich in ein Fahrzeug einbaubare Sicherheitsvorrichtung zu schaffen, die verhindert, dass ein Fahrzeug
infolge zu hoher Zentrifugalkraft beim Kurvenfahren
ins Schleudern gerät. Die erfindungsgemässe Lösung dieser Aufgabe ist Gegenstand des Patentanspruchs 1; bevorzugte Ausführungsarten sind in den Patentansprüchen
2 bis 10 umschrieben.

Im folgenden werden anhand der Zeichnung Ausführungsbeispiele der Erfindung näher erläutert. Es zeigen:

Fig. 1    eine Vorderansicht einer Sicherheitsvorrichtung,

Fig. 2    einen Längsschnitt durch die Vorrichtung nach
          der Linie II-II in Fig. 1,

Fig. 3    ein Schaltschema des elektrischen Teils der
          Sicherheitsvorrichtung in der elektrischen Anlage eines 4-Zylinder-Ottomotors, und

Fig. 4 eine Variante zu Fig. 3.

Die dargestellte Sicherheitsvorrichtung hat ein z.B. am Armaturenbrett eines Automobils zu befestigendes Gehäuse 1, in dem ein pendelnd um eine Achse 2 gelagertes, den Massenkörper bildendes Betätigungsorgan 3 eines Schalters 13 angeordnet ist, das am oberen Ende 4 zeigerförmig zugespitzt ist. Damit das Betätigungsorgan 3 in seiner durch die Schwerkraft bestimmten Gleichgewichtslage (Ruhelage) genau symmetrisch zu den weiter unten beschriebenen Kontaktstücken des Schalters 13 angeordnet ist, sind am unteren Ende 6 des Betätigungsorgans und am Gehäuse Justierstifte 7, 8 vorgesehen, die bei der Montage des Gehäuses 1 am Armaturenbrett mittels einer Lupe 9 in bezug aufeinander zu justieren sind. Die Achse 2 verläuft senkrecht zur Vorder- und Rückwand 11 und 12 des Gehäuses 1, so dass das Betätigungsorgan 3 bei am Armaturenbrett befestigter Rückwand 12 quer zur Fahrtrichtung des Automobils schwenken kann und deshalb durch die auf das Automobil beim Kurvenfahren wirkende Zentrifugalkraft aus seiner in der Zeichnung dargestellten Gleichgewichtslage gegen die Schwerkraft ausgelenkt wird.

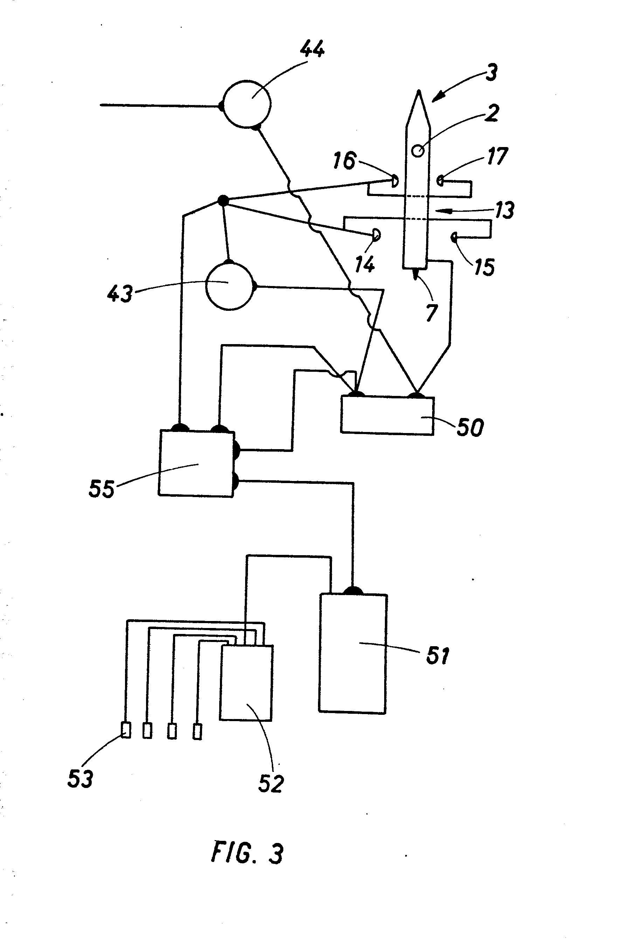

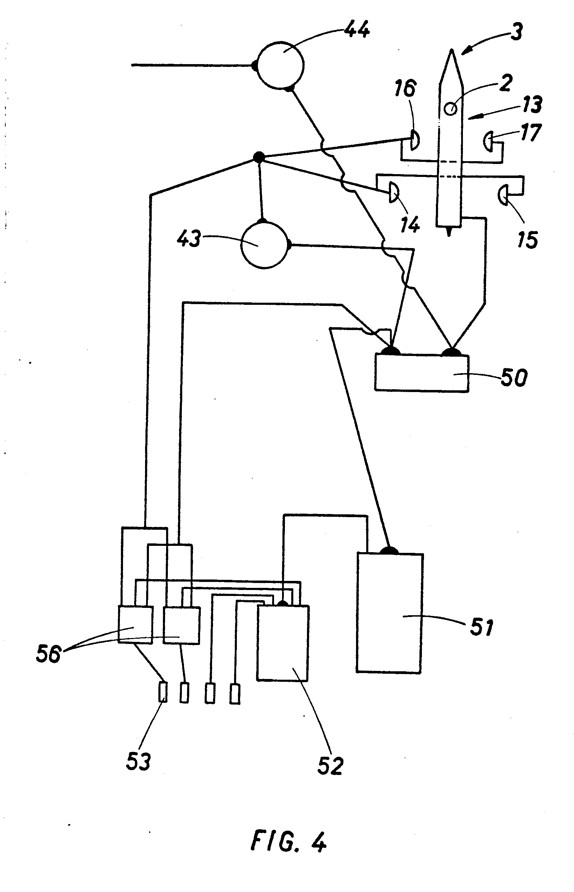

Das Betätigungsorgan 3 bildet ein Kontaktstück des Schalters 13 (Fig. 3 und 4),der geschlossen wird, wenn das Organ 3 eines der Kontaktstücke von zwei Kontaktstückpaaren 14, 15 und 16, 17 berührt. Das Organ 3 ist an den Berührungsstellen mit Kontakten versehen und durch die Achse 2 elektrisch mit dem an Masse liegenden Gehäuse 1 verbunden. Die Kontaktstücke 14-17 sind vom Gehäuse 1 elektrisch isoliert; ihre Anschlussleitungen sind lediglich schematisch in Fig. 3 und 4

0093832

dargestellt.

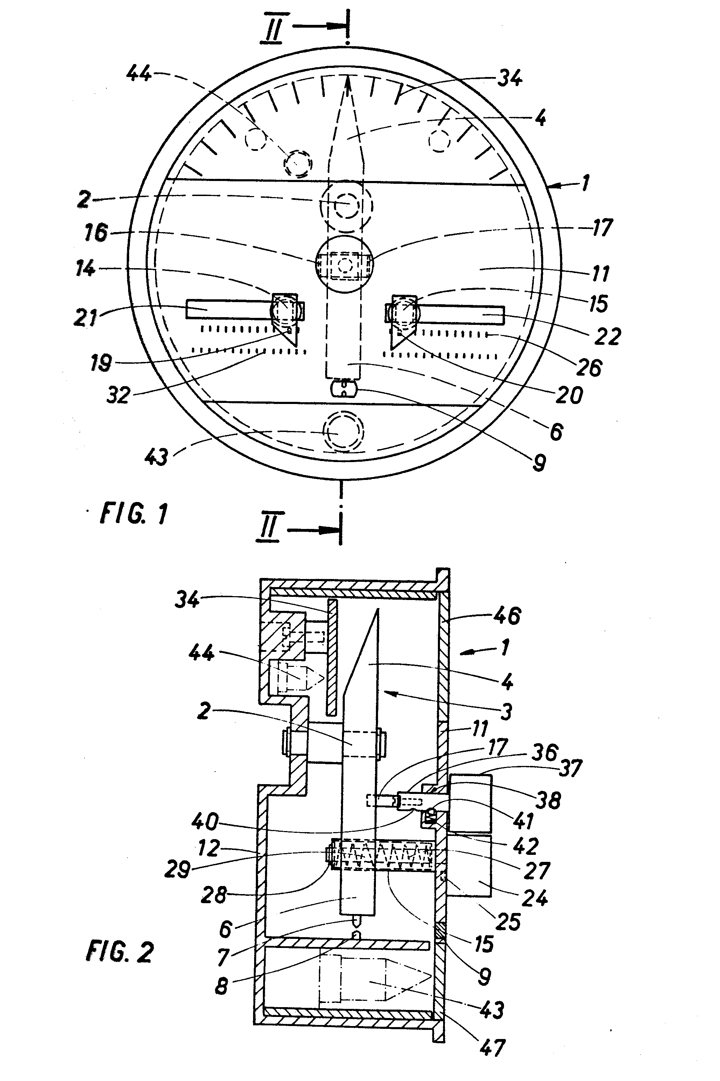

Die Kontaktstücke 14, 15 des einen Kontaktstückpaares sind an zwei Verstellgliedern 19, 20 angebracht, die in zwei in der Vorderwand 11 beidseits des Betätigungsorgans 3 und senkrecht zu diesem verlaufenden Schlitzen 21, 22 verschiebbar und in vorbestimmten Stellungen feststellbar gelagert sind. Zum Feststellen der Verstellglieder 19, 20 dient eine Verriegelungsvorrichtung mit einem an der Rückseite eines Knopfes 24 vorstehenden Verriegelungsstift 25, der in parallel zu den Schlitzen 21, 22 in Abständen voneinander angeordnete Aussparungen 26 der Vorderwand 11 unter der Wirkung einer Feder 27 einrückt. Die Feder 27 ist in einer das Kontaktstück 14 bzw. 15 bildenden Büchse angeordnet, ihr in Fig. 2 linkes Ende greift an einer in der Büchse 14, 15 verschiebbaren Stützmutter 28 an, die auf einem am Knopf 24 befestigten, durch den Schlitz 21, 22 geführten Bolzen 29 sitzt, und ihr rechtes Ende drückt den mit einem (nicht dargestellten) Isolierring versehenen Boden der Büchse 14, 15, (durch den der Bolzen 29 hindurchgeführt ist,) gegen die Rückseite der Vorderwand 11. Der Knopf 24 hat einen zeigerförmigen Ansatz, der auf den Aussparungen 26 zugeordnete Markierungen einer Skala 32 auf der Vorderwand 11 zeigt. Die Skala 32 und eine an der Rückwand 12 befestigte Skala 34 für den Zeiger 4 haben zweckmässig dieselbe Masseinteilung. Die Kontaktstücke 14, 15 werden mit Hilfe der Verstellglieder 19, 20 für das Fahren auf trockener Fahrbahn so eingestellt, dass das eine vom Betätigungsorgan 3 bei einer Auslenkung im Uhrzeigersinn und das andere bei einer Auslenkung im Gegenuhrzeigersinn berührt wird, bei der noch keinerlei Schleudergefahr beim Kurvenfahren besteht, das Verhältnis von Zentrifugalkraft zu Fahrzeuggewicht also um eine ausreichende Toleranz kleiner ist als der Haftreibungskoeffizient bei trockener Fahrbahn.

Die Kontaktstücke 16, 17 des anderen Kontaktstückpaars sind für das Fahren auf nasser Fahrbahn bestimmt und in einem in Abhängigkeit vom Fahrzeuggewicht fest eingestellten Abstand voneinander so angeordnet, dass sie vom Betätigungsorgan 3 bei einer Auslenkung berührt werden, bei welcher auf nasser Fahrbahn keine Schleudergefahr besteht, das Verhältnis der Zentrifugalkraft zum Fahrzeuggewicht also um eine ausreichende Toleranz kleiner als der Haftreibungskoeffizient bei nasser Fahrbahn ist. Die Kontaktstücke 16, 17 sind in einem bei der Montage einstellbaren Abstand voneinander mittels einer Schraube am in Fig. 2 linken Ende eines Bolzens 36 elektrisch isoliert befestigt, der mit Hilfe eines Knopfes 37 in einer an der Rückseite der Vorderwand 11 angeordneten Führung 38 parallel zur Achse 2 und gegen Drehung gesichert zwischen zwei Raststellungen verschiebbar ist. Der Bolzen 36 hat für die beiden Raststellungen zwei Aussparungen 40, 41, in die eine federnd in der Führung 38 gelagerte Kugel 42 einrastet. In der in Fig. 2 gezeigten Raststellung für das Fahren auf nasser Fahrbahn sind die beiden Kontaktstücke 16, 17 beidseits des Betätigungsorgans 3 in dessen Auslenkungsweg angeordnet. Zum Fahren auf trockener Fahrbahn wird der Bolzen 36 mit Hilfe des Knopfes 37 in die andere Raststellung zurückgezogen, in der die Kugel 42 in die Aussparung 40 einrastet und das Kontaktstückpaar 16, 17 aus dem Auslenkungsweg des Betätigungsorgans 3 zurückgezogen ist, so dass dieses nicht mehr an den Kontaktstücken 16, 17 sondern nur noch an den Kontaktstücken 14, 15 anschlagen kann.

Im Gehäuse 1 ist ferner noch eine das Schliessen des
Schalters 13 anzeigende Warnleuchte 43 sowie eine mit
Hilfe eines nicht dargestellten Schalters, z.B. zusammen mit der Beleuchtung des Armaturenbretts einschaltbare Leuchte 44 für die Beleuchtung der aus durchsichtigem Material bestehenden Skala 34 angeordnet. Wegen der Skala 34 und der Warnleuchte 43 besteht der
obere und untere Teil 46, 47 der Vorderwand 11 aus
durchsichtigem Material, z.B. aus Acrylglas.

In dem in Fig. 3 dargestellten Schaltschema sind von
der elektrischen Ausrüstung eines Automobils mit Ottomotor die Batterie 50, die Zündspule 51, der Zündverteiler 52 und die Zündkerzen 53 dargestellt. Der Schalter 13 ist in den von der Batterie gespeisten Steuerkreis eines Relais 55 geschaltet, dessen Kontaktkreis
zwischen den (nicht dargestellten) Zündschalter und die
Zündspule 51 geschaltet ist. Wenn der Schalter 13 offen
ist, d.h. das Betätigungsorgan 3 keines der Kontaktstükke 14-17 berührt, ist der Kontaktkreis des Relais 55 geschlossen und die Zündung arbeitet normal. Wenn der
Schalter 3 geschlossen wird, d.h. das Betätigungsorgan
3 eines der Kontaktstücke 14-17 berührt, wird durch den
von der Batterie im Steuerkreis erzeugten Erregerstrom
der Kontaktkreis des Relais 55 geöffnet und dadurch die
Zündung unterbrochen, so dass sich die Drehzahl des
Motors verringert. Die Zündung setzt erst wieder ein,
nachdem sich das Betätigungsorgan 3 vom Kontaktstück
gelöst hat.

Statt die Zündung vollständig zu unterbrechen, können
auch lediglich die Zündimpulse zu einem Teil der Zündkerzen 53 unterbrochen werden. Dazu ist beim Ausführungsbeispiel von Fig. 4 ein Relais 56 vorgesehen, das gleich
wie das Relais 55 beim Schliessen des Schalters 13 angezogen wird und dabei zwei Kontaktkreise öffnet, die
in zwei der vier vom Zündverteiler 52 zu den Zündkerzen
53 führenden Zündleitungen geschaltet sind. Bei der Ausführungsform von Fig. 4 werden somit bei geschlossenem
Schalter 13 noch zwei der vier Zündkerzen gezündet, so
dass der Motor mit der geringen Leistung zweier Zylinder
weiter angetrieben und seine Drehzahl durch Betätigung
des Gaspedals noch begrenzt beeinflusst werden kann,
was beim Kurvenfahren vorteilhaft sein kann. Die Ausführungsform von Fig. 4 ist gegenüber derjenigen von
Fig. 3 auch deswegen bevorzugt, weil das Ausschalten
der gesamten Zündung zu einem verhältnismässig starken,
in Kurven u.U. kritischen Abbremsen des Fahrzeugs führen kann, wogegen durch das Unterbrechen der Zündimpulse zu lediglich einem je nach Motortyp zu wählenden Teil der Zündkerzen eine allmähliche Verzögerung
des Fahrzeugs erreicht wird.

Nach dem Einbau der Vorrichtung in ein Fahrzeug kann
der Fahrer die Verstellglieder 19, 20 zunächst in die
äusserste Stellung schieben und beim Kurvenfahren aufgrund der jeweils vom Zeiger 4 auf der Skala 34 angezeigten Zentrifugalkraft die ihm für die zuverlässige
Vermeidung des Schleuderns angemessen erscheinende,
maximal zulässige Zentrifugalkraft bestimmen. Selbstverständlich kann die Einstellung der Verstellglieder
19, 20 auch aufgrund entsprechender Angaben in einer
Betriebsanleitung erfolgen. Da die maximal zulässige
Zentrifugalkraft beim Fahren auf nasser Fahrbahn vom
Durchschnittsfahrer kaum ermittelt werden kann, wird
die Einstellung des Abstands der Kontaktstücke 16, 17 zweckmässig vom Hersteller der Vorrichtung - je nach
Fahrzeugtyp - vorgenommen. Nachdem die Verstellglieder
19, 20 entsprechend der maximal zulässigen Zentrifugalkraft anhand der Skala 32 eingestellt sind, hat der
Fahrer jeweils lediglich noch bei nasser Fahrbahn den
Knopf 37 vorzuschieben und bei trockener Fahrbahn herauszuziehen. Beim Kurvenfahren wird das Betätigungsorgan je nach der Zentrifugalkraft ausgelenkt. Wird die
durch die Einstellung der Verstellglieder 19, 20 (bzw.
der Kontaktstücke 16, 17) gegebene Zentrifugalkraft erreicht, schliesst das Betätigungsorgan 3 den Schalter
13 und die Geschwindigkeit des Fahrzeugs wird durch das
Ausschalten der Zündung bzw. die Unterbrechung der Zündimpulse zu einzelnen Zündkerzen verzögert, so dass die
für das Schleudern kritische Zentrifugalkraft nicht erreicht wird.

Die oben beschriebene Sicherheitsvorrichtung kann mit
der in Fig. 3 und 4 dargestellten Schaltung grundsätzlich bei allen Motorfahrzeugen mit elektrischer Zündung,
z.B. auch bei Fahrzeugen mit Kreiskolbenmotor verwendet werden. Für die Verwendung bei einem Fahrzeug mit
Dieselmotor kann die Vorrichtung ein durch den Schalter 13 steuerbares, elektrisches Absperrorgan aufweisen, das die Kraftstoffzufuhr unterbricht, wenn der
Schalter geschlossen ist. Dabei kann ein einziges Absperrorgan zum Absperren der gesamten Kraftstoffzufuhr
oder es können ein oder mehrere Absperrorgane für das
Absperren der Kraftstoffzufuhr zu den Einspritzdüsen
einzelner Zylinder vorgesehen sein. Selbstverständlich
könnte die Sicherheitsvorrichtung auch für Fahrzeuge
mit elektrischer Zündung des Motors, (z.B. des Ottomotors), anstelle des Relais 55, 56 ein oder mehrere
durch den Schalter 13 gesteuerte Absperrorgane zum Absperren der Kraftstoffzufuhr zu sämtlichen oder einem
Teil der Zylinder aufweisen. Dies hat den Vorteil, dass

ein überfettetes Kraftstoffgemisch nach Wiederöffnen
des Schalters 13 vermieden wird. Demgegenüber hat die
im Zusammenhang mit Fig. 3 und 4 beschriebene Ausführungsform mit dem Relais 55, 56 den Vorteil, dass
sie in besonders einfacher Weise auch vom Laien in ein
Fahrzeug eingebaut werden kann, und dass praktisch
keine Gefahr eines unsachgemässen Einbaus besteht.

Der Vollständigkeit halber sei noch darauf hingewiesen,
dass die Sicherheitsvorrichtung selbstverständlich auch
für Fahrzeuge mit Elektromotor verwendet werden kann,
wobei der Schalter 13 ein Relais zum Schalten der Stromzufuhr zum Fahrmotor steuern kann.

Das den Massenkörper bildende Betätigungsorgan 3 könnte
auch durch Federn in der Ruhelage gehalten sein, wobei
es auch verschiebbar statt schwenkbar gelagert sein
könnte. Ferner könnten die Kontaktstücke 16, 17 seitlich verstellbar am Bolzen 36 angeordnet sein, und es
könnte ein drittes Kontaktstückpaar vorgesehen sein, das
ebenso wie das Kontaktstückpaar 16, 17 zwischen einer
Raststellung im Auslenkungsweg und einer solchen ausserhalb des Auslenkungswegs des Betätigungsorgans 3 hin-
und herschiebbar ist, und das z.B. für das Fahren auf
verschneiter Fahrbahn schon bei einer sehr kleinen
Auslenkung vom Betätigungsorgan 3 beaufschlagt wird.
Anstelle der Kontaktstücke 14-17 könnte ferner auch je
ein durch das Betätigungsorgan 3 betätigbarer Mikroschalter vorgesehen sein.

Durch das von der erfindungsgemässen Sicherheitsvorrichtung beim Kurvenfahren bei einer noch nicht kritischen Zentrifugalkraft bewirkte Unterbrechen der Zündimpulse oder der Kraftstoffzufuhr wird die Antriebskraft des Fahrzeugs ausgeschaltet, so dass dessen Geschwindigkeit sich allmählich verringert und dadurch eine Schleudergefahr vermieden wird.

RK/eb-6836
17.12.82

## Patentansprüche

1. Sicherheitsvorrichtung in einem Fahrzeug, insbesondere einem Automobil, gekennzeichnet durch einen quer zur Fahrtrichtung bewegbar gelagerten Massenkörper (3),der beim Kurvenfahren durch Zentrifugalkraft aus einer Ruhelage gegen eine Rückstellkraft auslenkbar ist und bei einer vorbestimmten Auslenkung eine Verringerung der Fahrzeuggeschwindigkeit auslöst.

2. Vorrichtung nach Anspruch 1, dadurch gekennzeichnet, dass der Massenkörper (3) pendelnd gelagert ist.

3. Vorrichtung nach Anspruch 1 oder 2, dadurch gekennzeichnet, dass der Massenkörper (3) bei der vorbestimmten Auslenkung einen Schalter (13) betätigt, der die Verringerung der Fahrzeuggeschwindigkeit auslöst.

4. Vorrichtung nach Anspruch 3, dadurch gekennzeichnet, dass der Massenkörper (3) ein Kontaktstück des Schalters (13) bildet oder aufweist und dieser mindestens zwei andere Kontaktstücke (14, 15; 16, 17) aufweist, die beidseits der Ruhelage an einstellbaren oder festen Positionen im Auslenkungsweg des Massenkörpers (3) angeordnet sind.

5. Vorrichtung nach Anspruch 3, dadurch gekennzeichnet, dass der Schalter (13) zwei durch den Massenkörper (3) betätigbare Schaltkontaktpaare (14, 15; 16, 17) aufweist, wobei die Schaltkontakte (14-17) jedes Paars beidseits der Gleichgewichtslage an wählbaren oder festen Positionen im Auslenkungsweg des Massenkörpers (3) angeordnet sind, die Positionen der Schaltkontakte des einen Paars (14, 15) für das Fahren auf trockener Fahrbahn einer grösseren Auslenkung und die Positionen der
Schaltkontakte des anderen Paars (16, 17) für das Fahren auf nasser Fahrbahn einer kleineren Auslenkung zugeordnet sind, und das andere Schaltkontaktpaar (16,
17) zum Fahren auf trockener Fahrbahn aus dem Auslenkungsweg des Massenkörpers (3) zurückziehbar ist.

6. Vorrichtung nach den Ansprüchen 2 und 5, dadurch
gekennzeichnet, dass der pendelnd gelagerte Massenkörper (3) in einem z.B. am Armaturenbrett eines Kraftfahrzeugs zu befestigenden Gehäuse (1) gelagert ist,
das eine zur Drehachse (2) des Massenkörpers (3) senkrechte Vorderwand (11) hat, die eine Führung (38) für
einen parallel/zur Drehachse (2) des Massenkörpers (3)
zwischen zwei Raststellungen (40, 41) manuell verschiebbaren Schieber (36) aufweist, der am dem Massenkörper
(3) zugewandten Ende das andere Schaltkontaktpaar (16,
17) trägt, das in der vorgeschobenen Raststellung (41)
des Schiebers (36) in den Auslenkungsweg des Massenkörpers (3) ragt und in der zurückgezogenen Raststellung
(40) zwischen dem Auslenkungsweg und der Vorderwand
(11) des Gehäuses (1) liegt, und dass die Vorderwand
(11) einen oder zwei Schlitze (21, 22) aufweist, in
dem bzw. denen zwei je einen der beiden Schaltkontakte
(14, 15) des einen Schaltkontaktpaars tragende Verstellglieder (19, 20) verschiebbar und in der jeweils gewählten Stellung feststellbar (25, 26) gelagert sind.

7. Vorrichtung nach Anspruch 6, dadurch gekennzeichnet, dass der pendelnd gelagerte Massenkörper (3) einen
Zeiger (4) zum Anzeigen der jeweiligen Zentrifugalkraft bzw. Auslenkung an einer Skala (34) aufweist,
und die Verstellglieder (19, 20) Zeiger aufweisen,
welche die Zentrifugalkraft bzw. Auslenkung, bei der die von ihnen getragenen Schaltkontakte (14, 15) vom Massenkörper (3) betätigt werden, auf einer zweiten Skala (32) mit entsprechender Masseinteilung anzeigen.

8. Vorrichtung nach einem der Ansprüche 3 bis 7, in einem Kraftfahrzeug, dadurch gekennzeichnet, dass der Schalter (13) während seiner Betätigung durch den Massenkörper (3) ein Organ (55, 56) einschaltet, das die Zündstrom- oder Kraftstoffzufuhr unterbricht.

9. Vorrichtung nach Anspruch 8, in einem Kraftfahrzeug mit elektrischer Funkenzündung des Kraftstoffs, dadurch gekennzeichnet, dass das vom Schalter (13) angesteuerte Organ durch ein in den Primär- oder Sekundärkreis der Zündspule (51) geschaltetes Relais (55) oder durch ein oder mehrere in eine oder einen Teil der Verbindungsleitungen zwischen den Zündkerzen (53) und dem Zündverteiler (52) geschaltete Relais (56) gebildet ist.

10. Vorrichtung nach Anspruch 8 oder 9, in einem Kraftfahrzeug mit elektrischer Funkenzündung des Kraftstoffs, dadurch gekennzeichnet, dass das vom Schalter (13) angesteuerte Organ (56) lediglich die Zündstromzufuhr zu einem Teil der Zündkerzen (53) unterbricht.

RK/eb-6836
17.12.82

FIG. 1

FIG. 2

FIG. 3

FIG. 4

| EINSCHLÄGIGE DOKUMENTE | | EP 83100741.4 |
|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | <u>DE - C - 485 972</u> (PRINZ)  <br> * Seite 1, Zeilen 18-38 * <br><br> ---- | 1,2 | B 60 K 31/00 |

RECHERCHIERTE
SACHGEBIETE (Int. Cl. ³)

B 60 K
B 62 D

Der vorliegende Recherchenbericht wurde für alle Patentansprüche erstellt.

| Recherchenort | Abschlußdatum der Recherche | Prüfer |
|---|---|---|
| WIEN | 31-08-1983 | DENK |